Europäisches Patentamt

European Patent Office

Office européen des brevets

(19)

(11) Veröffentlichungsnummer: **0 031 027**
**A2**

(12) EUROPÄISCHE PATENTANMELDUNG

(21) Anmeldenummer: 80107038.4

(22) Anmeldetag: 14.11.80

(51) Int. Cl.³: **G 01 J 3/12**
**H 04 B 9/00, G 11 C 13/04**

(30) Priorität: 22.12.79 DE 2952071

(43) Veröffentlichungstag der Anmeldung:
01.07.81 Patentblatt 81/26

(84) Benannte Vertragsstaaten:
DE FR GB

(71) Anmelder: IBM DEUTSCHLAND GMBH
Pascalstrasse 100
D-7000 Stuttgart 80(DE)

(84) Benannte Vertragsstaaten:
DE

(71) Anmelder: International Business Machines
Corporation

Armonk, N.Y. 10504(US)

(84) Benannte Vertragsstaaten:
FR GB

(72) Erfinder: Korth, Hans-Erdmann
Sandberger Strasse 34
D-7000 Stuttgart(DE)

(74) Vertreter: Teufel, Fritz, Dipl.-Phys.
Schönaicher Strasse 220
D-7030 Böblingen(DE)

(54) Anordnung zur spektralen Zerlegung von Licht; Einrichtung zur optischen Nachrichtenübertragung unter Verwendung solcher Anordnungen; Einrichtung zur Speicherung optischer Bilder unter Verwendung solcher Anordnungen.

(57) Zur eindeutigen räumlichen Aufspaltung eines optischen Frequenzgemischs in eine Vielzahl sehr enger Frequenzbereiche werden zwei dispersive Elemente (Transmissionsgitter, Reflexionsgitter, Interferometer) hintereinander im Strahlengang so angeordnet, daß sie Beugungsfiguren in zwei zueinander senkrechten Richtungen erzeugen und daß vom ersten dispersiven Element (35) eine sehr hohe Beugungsordnung (z.B. N = 100 ... 1000) und vom zweiten Beugungselement (34) eine niedere Beugungsordnung (z.B. M = 1 ... 10) in den Strahlengang fallen. Die hohe spektrale Auflösung dieser Anordnung ermöglicht eine Vielzahl von Anwendungen: Frequenzmultiplex-Datenübertragung über optische Fasern, dreidimensionales Fernsehen, Hochgeschwindigkeits-Bildaufzeichnung, Echtzeit-Spektralapparat. Bei der optischen Datenübertragung über Lichtquellenleiter wird die räumliche Lage der zu übertragenden Bildpunkte (Ebene 32) mit einem Spektralapparat (300) der genannten Art frequenzcodiert und nach Übertragung durch den Lichtquellenleiter mit einem zweiten Spektralapparat (300') in einer Bildebene (39) rekonstruiert.

FIG. 3

Croydon Printing Company Ltd.

0031027

Anordnung zur spektralen Zerlegung von Licht

Die Erfindung betrifft eine Anordnung zur spektralen Zerlegung von Licht nach dem Oberbegriff von Anspruch 1. Ein
bevorzugtes Anwendungsgebiet ist die optische Nachrichtenübertragung.

Für viele Anwendungen in der Optik (z.b. Spektralanalyse
oder optische Informationsverarbeitung) sind Spektralapparate erforderlich, mit denen mehrfarbiges (weißes) Licht eines
möglichst weiten Frequenzbereichs mit möglichst großer spektraler Auflösung und mit großer Geschwindigkeit zerlegt werden kann. Als Beispiel für die hier gestellten Anforderungen
sei die optische Nachrichtenübertragung näher betrachtet.

Optische Übertragungskanäle zur Übermittlung von Bildern
oder Daten besitzen aufgrund der sehr hohen Frequenz des
Lichts im Prinzip eine sehr hohe Übertragungskapazität. Die
störenden Ausbreitungsverluste des Lichtes konnten durch
die Entwicklung von Lichtleiterfasern ("optischen Fasern")
sehr geringer Dämpfung beherrscht werden; seither ist das
Interesse an der optischen Nachrichtenübertragung stark
angewachsen. Die meisten der bisher vorgeschlagenen Systeme
verwenden zur Nachrichtendarstellung zeitliche Folgen von
Lichtimpulsen, die über die Lichtleiterfaser geschickt
werden. Diese Lichtimpulse können nun aber nicht mit beliebig hoher Frequenz erzeugt werden. Bei einer monochromatischen Lichtquelle wird die Begrenzung der Impulsfolgefrequenz zum einen durch die Modulierbarkeit der Lichtquelle
oder der Schaltfrequenz des Modulators (in beiden Fällen
gegenwärtig maximal $10^8$ Hz) und zum anderen durch die Art
der Ausbreitung der Lichtimpulse in der Lichtleiterfaser
bestimmt: Die verschiedenen Arten der Fortpflanzung eines

GE 979 028E

Impulses in einer Faser, die sogenannten Ausbreitungsmoden, erleiden während der Übertragung verschieden große Verzögerungen, so daß eine Impulsverschmierung oder gar eine gegenseitige Überlappung von Impulsen auftritt. Dieser letztgenannte Nachteil läßt sich zwar mit Hilfe sogenannter Single-Mode-Fasern beheben, in denen die Impulse nur eine Ausbreitungsmöglichkeit haben. Diese Faserart ist teuer in der Herstellung, außerdem können neben weiteren Nachteilen nur Laser als Lichtquelle eingesetzt werden, die wiederum den Nachteil einer begrenzten Lebensdauer aufweisen. Die theoretisch mögliche Übertragungskapazität läßt sich jedoch wegen der begrenzten Modulierbarkeit auch auf diese Weise nicht erreichen.

Zur Erhöhung der Bandbreiten kann die Übertragung auch mit weißem Licht erfolgen, das mit Hilfe dispergierender Elemente (entsprechend dem Frequenzmultiplexverfahren in der Nachrichtentechnik) in eine Vielzahl von Spektralkanälen aufgeteilt wird, die ihrerseits jeweils durch optische Modulatoren beeinflußt werden. Wie erwähnt, können mit den bekannten Modulatoren Betriebsfrequenzen bis maximal 100 MHz erreicht werden. Als Einrichtungen zur spektralen Verlegung stehen Prismen oder Gitter zur Verfügung. Die maximale spektrale Auflösung eines Prismas beträgt etwa

$$\frac{\lambda}{\Delta \lambda} = 10^4,$$

d. h. bei einer Lichtfrequenz von $10^{15}$ Hz können $10^4$ Spektralbereiche $\Delta \lambda$ mit einer Frequenzbreite von je $10^{11}$ Hz erzeugt werden. Ein erheblicher Teil dieser Frequenzbereiche bleibt infolge der begrenzten Modulationsfrequenz unausgenutzt. Die Anzahl der zur Verfügung stehenden Datenkanäle könnte um einen Faktor $\frac{10^{11}}{10^8} = 1000$ gesteigert werden, ließe sich die spektrale Auflösung verfeinern.

GE 979 028 E

Eine höhere Auflösung als mit Prismen ist mit Beugungsgittern zu erzielen; für ein Gitter mit einer Anzahl N = 1000 Gitterstrichen und bei Beobachtung in der k-ten Ordnung des Spektrums, z. B. K = 1000, beträgt die Auflösung

$$\frac{\lambda}{\Delta\lambda} = k \cdot N = 10^6.$$

Die Anzahl der Übertragungskanäle könnte hier gegenüber dem Prisma also um den Faktor 100 gesteigert werden.

Die höhere Auflösung des Gitters läßt sich jedoch nicht nutzen, da hier bei Beleuchtung mit einem relativ breiten Frequenzband (weißes Licht) und bei Beobachtung eines Spektrums in hoher Ordnung die einzelnen Spektren verschiedener Ordnung sich überlappen und somit keine reinen Spektralfarben, sondern nur Mischfarben entstehen. Bei Gitterspektrographen mit hoher Auflösung wird deshalb das zu untersuchende Licht vorzerlegt, so daß nur ein sehr enges Frequenzband auf das Gitter auftrifft. Bei einem Übertragungssystem würde eine Vorzerlegung die Zahl der nutzbaren Datenkanäle wiederum stark herabsetzen. Die Vorzerlegung des Lichtes ist auch bei der Arbeit mit Spektralanalysegeräten störend, wenn größere Frequenzbereiche untersucht werden müssen.

Neben der Impulsübertragung sind andere optische Übertragungseinrichtungen bekannt geworden, die auf eine direkte optische Abbildung über die Lichtleitfaser hinzielen. Ein naheliegendes Beispiel ist die Vereinigung einer Vielzahl von Lichtleitfasern zu einem Lichtkabel. Die Auflösung des entstehenden Bildes ist dann durch die Anzahl der verwendeten Lichtfasern bestimmt.

Die Übertragung eines Bildes durch eine einzige Lichtleitfaser wurde im Stand der Technik ebenfalls schon vorgeschlagen. Ohne weitere Hilfsmittel entsteht bei dieser Art der optischen Übertragung infolge der Dispersion der Phasenge-

GE 979 028 E

schwindigkeit (die auch zu der schon erwähnten Impulsverschmierung führt) in der Faser kein scharfes Bild. Zur
Vermeidung dieser Schwierigkeit wird in dem Artikel "Parallel
image transmission by a single optical fiber" in Optics
letters, Band 2, Nr. 5, Mai 1978, Seite 133, vorgeschlagen,
eine optische Faser mit einem bestimmten Verlauf des Brechungsindexgradienten zu verwenden und das zu übertragende Bild
spektral und räumlich zu codieren. Das Auflösungsvermögen bei
dieser Anordnung ist gering. In der deutschen Auslegeschrift
1 299 902 wird eine Bildübertragung über ein aus mehreren
optischen Fasern bestehendes optisches Flachbandkabel beschrieben, bei dem an beiden Enden der Übertragungsstrecke
dispergierende Elemente angeordnet sind. Die beschränkte
spektrale Auflösung wird dabei durch die Vervielfachung der
Übertragungsfasern teilweise kompensiert.

Vor diesem Stand der Technik stellt sich die Erfindung die
Aufgabe, eine Anordnung zur spektralen Zerlegung von Licht
anzugeben, die eine sehr große Anzahl sehr schmalbandiger
Frequenzbereiche liefert, die parallel verarbeitet werden;
damit soll insbesondere eine Anordnung zur optischen Nachrichtenübertragung angegeben werden, in der die hohe theoretische Übertragungskapazität von Licht als Informationsträger weitgehend ausgenutzt werden kann.

Diese Aufgabe wird durch die im Hauptanspruch gekennzeichnete Erfindung gelöst. Anwendungen und Ausgestaltungen der Erfindung sind in den weiteren Ansprüchen gekennzeichnet.

Die Aufspaltung des zur Übertragung verwendeten weißen
Lichts in eine sehr große ($10^6$) Anzahl von einzelnen, sehr
engen ($\frac{\lambda}{\vartriangle\lambda} = 10^8$) Spektralbereichen werden zwei hintereinandergeschaltete, senkrecht zueinander angeordnete optische Gitter verwendet; das erste Gitter erzeugt ein Spektrum relativ
hoher Ordnung (z.B. 100 bis 1000), das zweite Gitter ein Spektrum relativ niederer Ordnung (z.B. 1 bis 10). Die kombinierte Wirkung beider Gitter ergibt eine hoch aufgelöste Spektralzerlegung: Die Hintereinanderschaltung zweier Gitter, die Spektren verschiedener Ordnungen erzeugen, hebt die Überlappung der Spektren hoher Ordnung in einem Einzelgitter auf. Es gelingt damit, den nutzbaren Frequenzbereich eines Gitters ohne Verlust an Auflösungsvermögen beizubehalten.

In einer Bildebene hinter den beiden Gittern besteht so eine eindeutige Zuordnung zwischen geometrischem Bildpunkt und Frequenz.

In einem optischen Übertragungssystem mit einer Lichtleiterfaser als Übertragungsmedium erfolgt die Codierung des Bildes auf der Eingangsseite der optischen Faser mit Hilfe von zwei derartigen gekreuzten Gittern; am Austrittsende der Faser sind ebenfalls zwei gekreuzte Gitter angebracht, die zur Decodierung dienen und die Intensitätsverteilung wiederherstellen, die auf der Eingangsseite in der Bildebene vorliegt.

Sollen keine Bildvorlagen, sondern Daten übertragen werden, so tritt an die Stelle des Bildes eine Modulatormatrix, deren einzelne Punkte (Lichtventile) elektrisch steuerbar sind.

Die Übertragungsgeschwindigkeit eines derart ausgebildeten optischen Übertragungssystems liegt im Tera-Baud-Bereich.

Die erreichbare hohe Auflösung gekreuzt angeordneter Gitter kann neben Übertragungseinrichtungen auch für andere optische Komponenten nutzbar gemacht werden: so z. B. für Spektrographen mit großer Auflösung, für optische Datenspeicher mit hoher Arbeitsgeschwindigkeit oder für dreidimensionales Fernsehen.

Ausführungsbeispiele der Erfindung werden nun anhand von Zeichnungen näher erläutert.

GE 979 028 E

- 6 -

Es zeigen:

Fig. 1        eine Darstellung der Wirkung gekreuzter Gitter in der Frequenzebene,

Fig. 2A, B, C   Anordnungen gekreuzter Gitter mit Spektren
    und D       verschiedener Ordnungszahl, die eine eindeutige
                Zuordnung von Ort zu Frequenz ergeben,

Fig. 3        das Prinzip einer optischen Nachrichtenübertragungseinrichtung mit gekreuzten Gittern
              und Lichtleiterfaser,

Fig. 4        den prinzipiellen Aufbau einer Übertragungs-
              einrichtung für dreidimensionale Fernsehbild-
              der,

Fig. 5        den prinzipiellen Aufbau einer Übertragungseinrichtung für 2,5-dimensionale Fernsehbilder,

Fig. 6        den prinzipiellen Aufbau eines hochauflösen-
              den Echtzeitspektrometers, in dem gekreuzte
              Gitter als Dispersionselemente verwendet werden,

Fig. 7        den prinzipiellen Aufbau einer Einrichtung
              zur Bildaufzeichnung mit hoher Geschwindigkeit, in der gekreuzte Gitter verwendet werden,

Fig. 8        den prinzipiellen Aufbau einer Einrichtung
              zur Bildaufzeichnung nach Fig. 7 zur Erzeugung
              von Volum-Hologrammen.

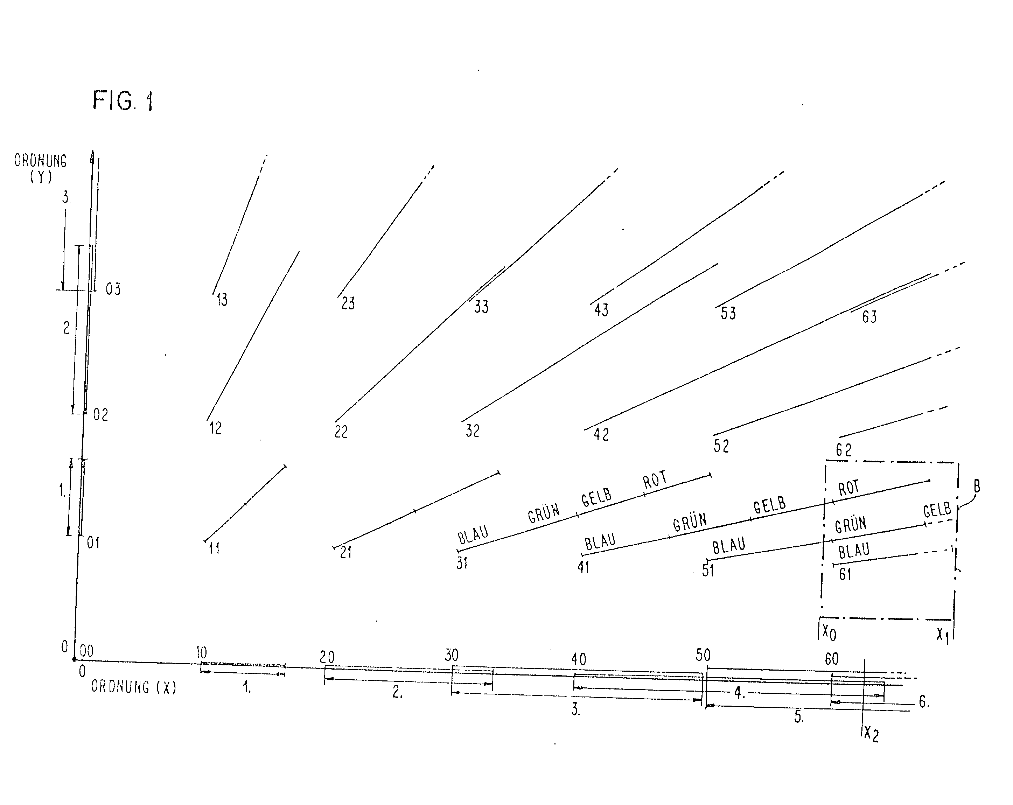

Zur Erläuterung der Wirkungsweise der Erfindung zeigt Fig. 1
die durch geeignete optische Elemente wie Linsen usw. erzeugte Helligkeitsverteilung (Spektren bei Beleuchtung mit

GE 979 028 E

- 7 -

weißem Licht) in der Frequenzebene eines aus zwei gekreuzten Gittern bestehenden optischen Systems. Die Gitter sind längs der x- bzw. y-Achse ausgerichtet. Die Spektren müssen jeweils die Gitter-Bedingung für positive Interferenz an beiden Gittern erfüllen:

$$\sin \alpha_1 = \frac{N\lambda}{d_1} \quad \text{und} \quad \sin \alpha_2 = \frac{M \cdot \lambda}{d_2}$$

(dabei bedeuten $\alpha_1$, $\alpha_2$ die Ablenkwinkel in x- bzw. y-Richtung, M, N die Ordnungen der gebeugten Strahlen, $d_1$, $d_2$ die Gitterkonstanten und $\lambda$ die Lichtwellenlänge). Die einzelnen, in der x-y-Ebene entstehenden Spektren werden durch ihre Ordnungen (N, M) gekennzeichnet. So ist das erste Spektrum in x-Richtung durch den Index (1,0) gekennzeichnet, das erste Spektrum in y-Richtung durch den Index (0,1), das erste Spektrum im ersten Quadranten durch (1,1) usw. Alle Spektren liegen auf Geraden durch den Ursprung (Spektrum nullter Ordnung). Die Spektren niederer Ordnung sind voneinander getrennt, so daß in diesen Gebieten der Frequenzebene eine eindeutige Zuordnung zwischen Wellenlänge und geometrischem Ort vorliegt. Die Ausdehnung eines Spektrums niederer Ordnung ist jedoch gering und damit auch die Anzahl der definierbaren Frequenzbereiche $\Delta\lambda$. Spektren höherer Ordnung weisen eine größere Ausdehnung auf, gleichzeitig führt diese Ausdehnung jedoch zur Überlappung von Spektren verschiedener Ordnung. Mit steigender Ordnung nimmt auch die Überlappung zu. Beispielsweise sind an der Stelle $x_2$ der x-Achse die Spektren folgender Ordnungen gleichzeitig vorhanden:

4, 5, 6.

Diese Mehrdeutigkeit der Frequenzzuordnung zu einem bestimmten Punkt der Frequenzebene infolge Überlagerung von Spektren kann nicht nur auf der x- und y-Achse, sondern auch auf allen durch den Ursprung des Achsenkreuzes gehenden Geraden auftreten.

GE 979 028 E

Bei bestimmten Kombinationen von Ordnungsparametern der Spektren, z. B. einem Spektrum sehr hoher Ordnung in x-Richtung und niederer Ordnung in y-Richtung, können in der Frequenzebene jedoch Bereiche gefunden werden, in denen trotz hoher Ordnung noch keine Überlappung auftritt. Mehrere derartige über- oder nebeneinanderliegende Spektren ohne Überlappung definieren dann einen Frequenzebenenbereich, in dem eine eindeutige Zuordnung zwischen geometrischer Lage und Lichtfrequenz besteht. (z.B. Bereich B in Fig. 1.)

Die Erzeugung derartiger Frequenzbereiche erfolgt nun erfindungsgemäß durch Kreuzen zweier Gitter, die Spektren unterschiedlicher Ordnungen in x- bzw. y-Richtung erzeugen. Diese Eindeutigkeit der Frequenzzuordnung zu einem Bereich (z.B. B in Fig. 1) der Frequenzebene (x, y) liegt dann vor, wenn folgende Bedingungen erfüllt sind:

- in diesem Bereich haben keine zwei Spektren dasselbe Ordnungszahlverhältnis (N:M);
- in diesem Bereich erscheint keine Farbe (Spektralbereich) doppelt. Werden die Grenzen des Bereichs B in x-Richtung mit $x_0$ und $x_1$ bezeichnet (mit entsprechenden Wellenlängen $\lambda_{x0}$, $\lambda_{x1}$), so muß gelten:

$$N \cdot \lambda_{x1} < (N + 1)\lambda_{x0}.$$

Anschaulich läßt sich das Zustandekommen dieser eindeutigen Zuordnung dadurch vorstellen, daß die sich stark überlappenden hohen Beugungsordnungen auf der X-Achse durch das in Y-Richtung angeordnete Gitter mit größerer Gitterkonstante und damit geringerer Auflösung gerade soweit in y-Richtung auseinander gezogen werden, daß der betreffende Teil der Frequenzebene möglichst dicht mit Frequenzpunkten belegt ist. Da die an der Überlappung beteiligten Spektren verschiedener X-Ordnung frequenzmäßig gegeneinander verschoben sind, ist nach Aufhebung der Überlappung jeder Punkt in dem betrachte-

- 9 -

ten Teil der Frequenzebene eindeutig einer bestimmten Frequenz (Wellenlänge) des zur Beleuchtung verwendeten weißen Lichts zugeordnet. Die einzelnen übereinanderliegenden Frequenzbänder sind unter sich im wesentlichen parallel; sie liegen zwar alle auf Ursprungsgeraden durch den Nullpunkt der Frequenzebene, doch sind die Unterschiede in den Steigungen dieser Geraden bei dem großen Wert von X nur gering.

Die Anzahl der Rasterzeilen (= übereinanderliegender Spektren) im eindeutigen Frequenzebenen-Bereich hängt von der höchsten Ordnungszahl der Spektren und vom übertragenen Spektralbereich $(x_1 - x_0)$ ab (dieser hat in Fig. 1 ungefähr den Wert 0,6 Oktaven).

Die Gebiete mit eindeutiger Frequenzzuordnung zur geometrischen Lage sind nicht auf die Nachbarschaft der X-Achse beschränkt, wie sie im Beispiel dargestellt wurden. Nach derselben Vorschrift können auch andere derartige Gebiete in der Frequenzebene gefunden werden.

Ein nach dieser Vorschrift entstehendes eindeutiges Frequenzgebiet ist beispielsweise in Fig. 1 eingezeichnet. Erzeugt das in x-Richtung ausgerichtete Gitter ein Spektrum der Ordnung n = 4, 5, 6 und das in y-Richtung ausgerichtete Gitter ein Spektrum der Ordnung n = 1, so ergibt sich der im Teil B der Fig. 1 dargestellte Ausschnitt der Frequenzebene. In x-Richtung ist die Breite des Frequenzbandes ungefähr $\frac{\lambda}{\Delta\lambda} = 10^{-1}$. In y-Richtung sind Ausschnitte von Spektren übereinandergeschichtet, deren Ordnung in x-Richtung zunimmt. Der Frequenzbereich jedes Bandes ist gegenüber allen anderen verschoben, so daß im ganzen betrachteten Ausschnitt der Frequenzebene eine eindeutige Zuordnung von Wellenlänge zum geometrischen Ort besteht. Beispielsweise ist das zweite Band von unten im Vergleich zum ersten Band (mit dem Spektralausschnitt von blau bis grün) gegen längere Wellenlängen verschoben und deckt den daran anschließenden Ausschnitt von grün nach gelb
ab. Entsprechendes gilt für weiter oben liegende Frequenzbänder.

Wird die Ordnung des Spektrums in y-Richtung größer als n = 1
gewählt, so wird die natürliche Ordnung der Spektralfarben
gestört, die sich im Fall n = 1 ergibt, wenn von einer Rasterzeile zur nächsten fortgeschritten wird. Die Rasterzeilen,
als Bestandteile des vollständigen Spektrums (von blau nach
rot) sind dann durchmischt.

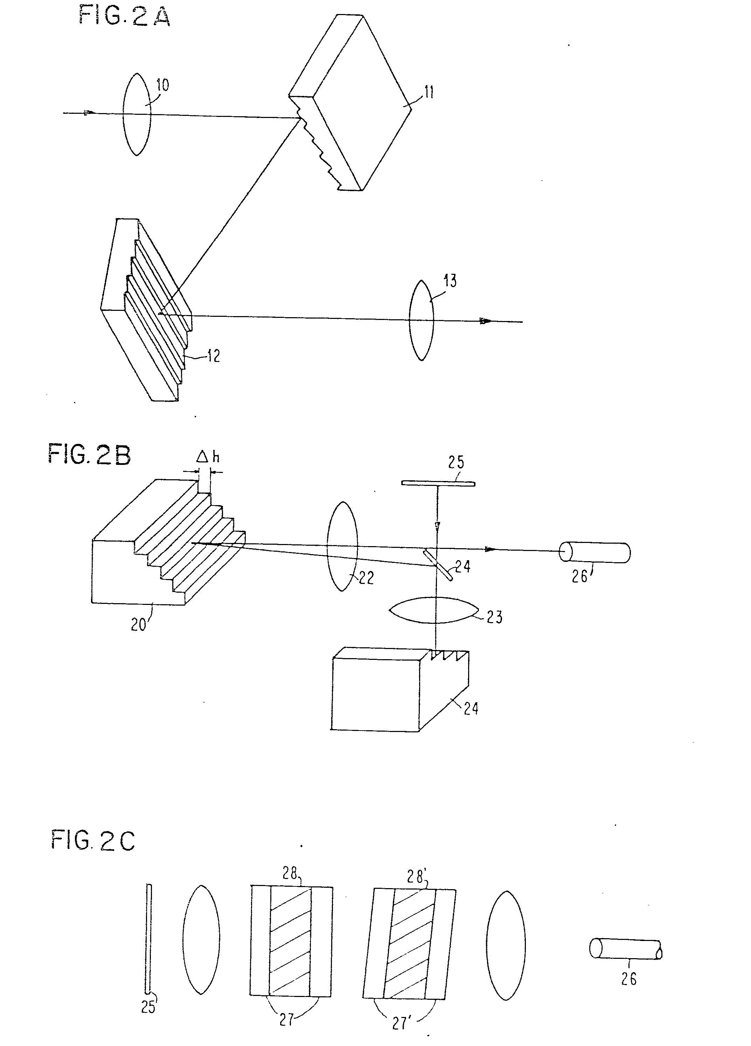

In Fig. 2 sind konstruktive Ausgestaltungen der vorzugsweise
zu verwendenden Gitter dargestellt. Der Einsatz zweier gekreuzter Transmissionsgitter, wie er der Beschreibung der
prinzipiellen Wirkungsweise der Erfindung zugrundegelegt
wurde, empfiehlt sich in der Praxis nicht, da diese nur bei
Spektren niederer Ordnung ausreichende Intensitäten liefern.
Soll ein Spektrum in einer bestimmten hohen Ordnung die maximale Lichtintensität aufweisen, so bieten sich sogenannte
Spiegelgitter ("blazed gratings") an, die ein stufenförmiges
Teilungsprofil aufweisen und als Reflexionsgitter ausgebildet
sind.

In Fig. 2A trifft das spektral zu zerlegende Licht von links
kommend über eine (wahlweise vorhandene) Linse 10 auf ein
erstes Spiegelgitter 11, dessen Fläche und Gitterrichtung senkrecht zur Zeichenebene orientiert sind. Das am ersten Gitter gebeugte Licht trifft auf ein zweites Spiegelgitter (12),
dessen Fläche ebenfalls senkrecht zur Zeichenebene liegt;
die Gitterrichtung auf dieser Fläche verläuft aber parallel
zur Zeichenebene. Über eine (ebenfalls wahlweise vorhandene)
Linse (13) verläßt das spektral in beide Richtungen zerlegte
Licht die Anordnung.

Eine weitere Möglichkeit, Spektren sehr hoher Ordnung herzustellen, bieten sogenannte Stufengitter nach Fig. 2B. Der

GE 979 028 E

- 11 -

Gangunterschied zweier interferierender Strahlen (d.h. die Ordnung der Interferenz) wird durch die Höhe Δh der Stufen bestimmt, an denen die Strahlen reflektiert werden. In Fig. 2B sind zwei gekreuzte Stufengitter 20 und 21 dargestellt, die jeweils mit Kollimatorlinsen 22, 23 versehen sind. Das spektral codierte Bild des Gegenstands 25 kann z.B. in die Eintrittsöffnung einer optischen Faser 26 geleitet werden.

Eine weitere spektrale Zerlegungseinrichtung zeigt Fig. 2C; dort sind zwei Perot-Fabry Interferometer (27, 27') hintereinandergeschaltet. Die Interferometer sind leicht gegeneinander verkippt (Winkel δ). Der besondere Vorteil dieser Anordnung besteht darin, daß die Interferometer gleichzeitig als Farbstofflaser ausgebildet werden können und so als optisches Verstärkungselement dienen. Dazu wird eine laseraktive Schicht (28, 28') zwischen den Interferometerplatten angebracht.

Die besprochenen Anordnungen mit zwei gekreuzten Gittern, die verschiedene Beugungsordnungen erzeugen, zerlegen das eintreffende weiße Licht in eine Vielzahl ($\sim 10^6$) von einander unabhängiger optischer Übertragungskanäle. Jeder dieser Kanäle kann individuell moduliert werden und weist eine sehr geringe Bandbreite $\Delta \nu$ auf; Dispersionseffekte, wie sie z.B. in optischen Fasern auftreten, sind für diese schmalen Frequenzbänder praktisch ohne Einfluß.

Alle so erzeugten Frequenzbänder werden parallel verarbeitet; Einrichtungen zur optischen Datenverarbeitung oder zur optischen Datenübertragung, die von dieser spektralen Zerlegungsanordnung Gebrauch machen, weisen deshalb eine sehr hohe Verarbeitungsgeschwidigkeit auf. Beispiele für derartige Einrichtungen werden im folgenden besprochen.

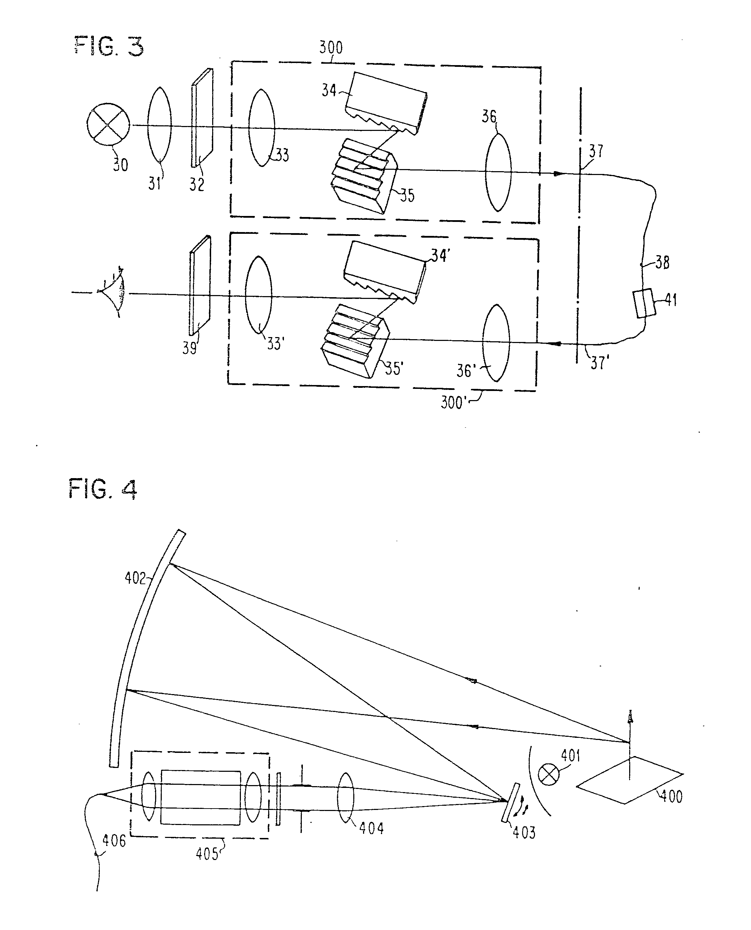

Fig. 3 zeigt den prinzipiellen Aufbau einer optischen Nachrichtenübertragungseinrichtung, die mit spektraler Codierung

GE 979 028 E

durch gekreuzte Gitter arbeitet. Von einem flächenhaften Objekt 32 soll über eine Lichtleiterfaser 38 ein reelles Bild 39 erzeugt werden. Das Objekt 32 wird mit weißem Licht (aus Quelle 30 über Linse 31) beleuchtet und das vom Objekt austretende Licht in eine Spektraleinheit 300 gelenkt, in der zwei gekreuzte Gitter 34 und 35 mit zugehörigen Sammellinsen 33 und 36 angeordnet sind. Das Gitter 35, das auch als "y-Gitter" bezeichnet wird, liegt optisch der Eintrittsöffnung 37 der optischen Faser am nächsten und erzeugt ein Spektrum sehr hoher Ordnung. (Die Anordnung mit vertauschten Gittern ist ebenfalls möglich.) Die Gitterteilung des x-Gitters 34 liegt räumlich senkrecht zu der Gitterteilung des y-Gitters und erzeugt ein Spektrum niederer Ordnung. Die Eintrittsebene 37 der optischen Faser 38 entspricht der Frequenzebene der Spektraleinrichtung 300. Die optische Faser empfängt von den verschiedenen Spektren jedes Objektpunkts daher nur ein sehr enges Frequenzband, so daß die in der Faser auftretenden Frequenzen direkt mit dem geometrischen Ort der Objektpunkte verknüpft sind.

Am Austrittsende 37' der optischen Faser ist eine zweite Spektraleinrichtung 300' angeordnet, die im Aufbau der ersten Spektraleinrichtung 300 entspricht. Das y-Gitter zur Erzeugung des Spektrums hoher Ordnung liegt auch hier optisch der Lichtleiterfaser 38 am nächsten. Die spektrale Zerlegung des in der optischen Faser vorhandenen Frequenzgemischs ergibt dann wieder in Umkehrung des Lichtwegs das reele Bild 39 des Objekts 32.

Die Anzahl der auf diese Weise parallel zu übertragenden unabhängigen Datenkanäle ist sehr groß. ( $10^6$.) Jeder dieser Datenkanäle kann unabhängig moduliert werden, z. B. mit Hilfe eines zugeordneten elektrisch steuerbaren Lichtmodulators innerhalb einer Modulatormatrix, die anstelle des Objekts 32 tritt. Derartige Modulatormatrixen können mit magneto-optischen, ferroelektrischen oder Flüssigkristallelementen aufgebaut werden. Solche elektronisch steuerbaren
"Photocomposer" sind aus Vorschlägen für optische Speicher
bekannt geworden. Sie können entweder in Transmission oder
in Reflexion betrieben werden. Am Ort des entstehenden Bildes 39 wird dann eine aus entsprechend vielen Elementen bestehende Photoempfängermatrix aufgestellt. Mit dieser Anordnung lassen sich beispielsweise digitale Daten mit sehr hoher Geschwindigkeit (im Tera-Baud-Bereich) übertragen.

In Abwandlung der Anordnung nach Fig. 3 kann die spektrale
Codierung auch beleuchtungsseitig erfolgen; dabei wird das
Objekt hinter der Spektraleinrichtung 300 in deren Frequenzebene angeordnet. Eine nachgeschaltete Linse sammelt das
codierte Licht auf die Eintrittsöffnung der optischen Faser.

Bei langen Übertragungswegen muß gegebenenfalls eine Signalauffrischung erfolgen. Dazu kann ein breitbandiger Laserverstärker (z. B. Farbstofflaser) Verwendung finden, wie er in
Fig. 3 unter Bezugszeichen 41 angedeutet ist.

Die hohe Bildübertragungsgeschwindigkeit einer derartigen
Anordnung ermöglicht die Realisierung eines dreidimensionalen Fernsehens. Dort ist es erforderlich, eine Szene
unter verschiedenen Blickwinkeln und der üblichen Bildfolgefrequenz von 25 Bilder/sec. zu übertragen. Mit einer Anordnung nach Fig. 4 läßt sich dieses Problem lösen. Das Objekt
400 wird mit einer weißen Lichtquelle 401 beleuchtet und
das reflektierte Lichte über einen elliptischen Spiegel 402
auf einen Winkeldeflektor 403 gegeben. Dieser Winkeldeflektor kann beispielsweise ein um zwei Achsen drehbarer Spiegel
sein, der periodisch das Objekt unter verschiedenen Blickwinkeln abtastet. Das entstehende, einem bestimmten Blickwinkel entsprechende Bild, wird über eine Linse 404 auf eine
Spektraleinrichtung 405 mit gekreuzten Gittern gegeben und
parallel in eine optische Faser 406 eingespeist. Die hintereinander unter verschieden Blickwinkeln abgetasteten

GE 979 028 E

zweidimensionalen Bilder erscheinen im Empfänger, der ein
synchron betriebenes Ablenksystem enthält, als dreidimensionales Bild. Am Ort des Schwingspiegels und vor dem Eintritt in die spektrale Zerlegungsanordnung werden Zwischenbilder erzeugt.

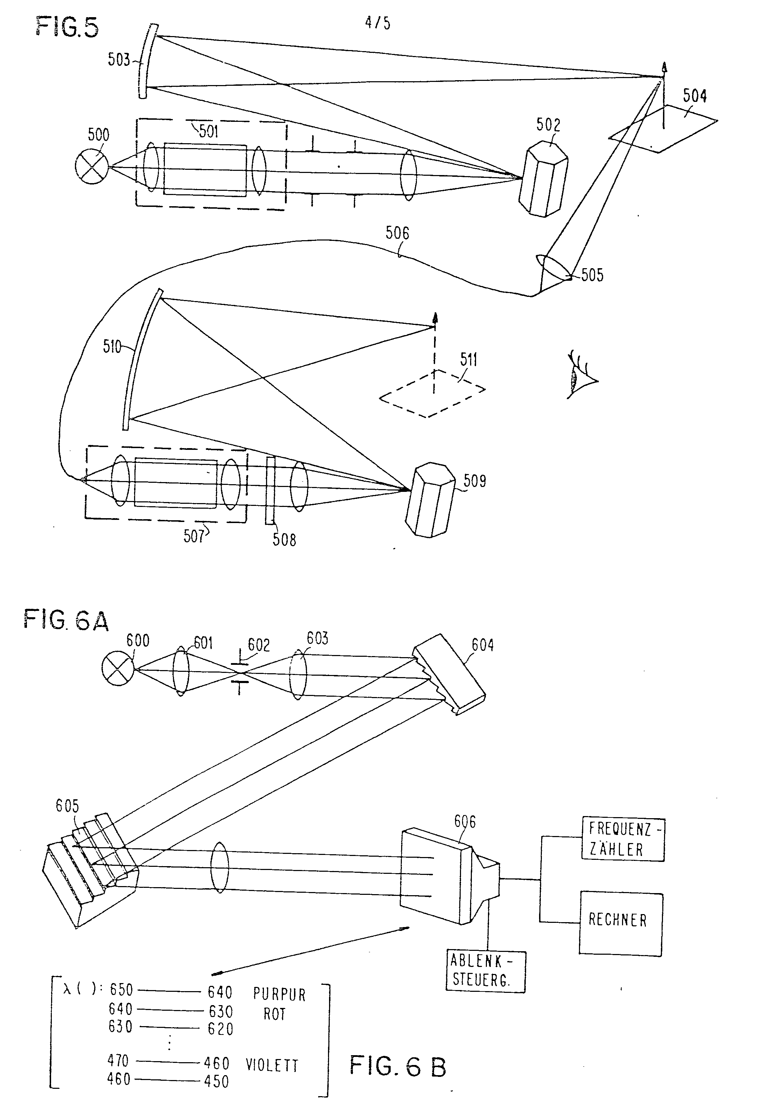

Eine alternative Ausführungsform eines räumlichen Fernsehübertragungssystems zeigt Fig. 5. Die Spektraleinrichtung
501 ist dort direkt hinter der weißen Lichtquelle 500 angeordnet und beleuchtet das Objekt 504 über einen Polygonspiegel 502 und einen elliptischen Spiegel 503. Das vom
Objekt reflektierte, spektral zerlegte Licht gelangt über
einen Kondensor 505 in eine optische Faser 506 und wird am
Ort des Empfängers über eine weitere Spektraleinrichtung 507
zerlegt. Das aus der Spektraleinrichtung tretende Licht wird
über einen Diffusor 508 in der Zwischenbildebene wiederum
auf einen Polygonspiegel 509 und einen elliptischen Spiegel
510 gegeben, um das reele Bild 511 zu erzeugen. Diese Anordnung kann als 2,5-dimensionale Bildübertragung bezeichnet
werden, da die beiden Polygonspiegel ein Abtasten nur in
einer Richtung erlauben. Der optische Diffusor im Empfänger
ermöglicht auch hier eine volle dreidimensionale Bildrekonstruktion bei visueller Betrachtung. Unter Diffusor wird
hier eine in nur einer Bildrichtung (der Senkrechten) wirksame Mattscheibe verstanden. Als solche wirkt z.B. eine
Glasplatte mit waagrechten Kratzern, deren Größe, Tiefe und
Verteilung statistisch schwankt.

Die mit gekreuzten Gittern erzielbare hohe spektrale Auflösung in der Frequenzebene kann weiter direkt zum Aufbau
eines hochauflösenden Echtzeit-Spektrometers ausgenutzt
werden. Fig. 6 zeigt den prinzipiellen Aufbau eines derartigen Geräts. Das zu untersuchende Licht einer Quelle 600
wird über eine Linse 601, eine Lochblende 602 und eine
Kollimatorlinse 603 auf zwei gekreuzte Gitter 604 und 605
gegeben, von denen das zweite, das y-Gitter, ein Spektrum
sehr hoher Auflösung erzeugt. In der Frequenzebene dieser
Gitteranordnung wird eine (schwarz-weiß) Fernsehkamera

GE 979 028 E

angebracht, die die Frequenzebene rasterförmig abtastet.
Fig. 6B zeigt die (auch hier eindeutige) Zuordnung der
Spektral-Wellenlängen zur Abtastfläche der Fernsehkamera.
Das Videosignal als Funktion der Zeit entspricht somit dem
Spektrum in der Frequenzebene. Dieses Spektrometer vereinigt
in sich die Vorteile einer sehr schnellen Arbeitsweise mit
hoher Auflösung und breitem Arbeitsbereich.

Wird die Strahlablenkung der Fernsehkamera so gesteuert, daß
sie der Wellenzahl (1/Wellenlänge) proportional ist, so ergibt sich ein Verfahren zur interferometrischen Abstands-
und Schichtdickenmessung. Das Interferenzspektrum erzeugt
nämlich ein zeitlich periodisches Videosignal, wobei die
Schichtdicke der Frequenz dieser Änderung proportional ist.
Wird das Videosignal also einem Frequenzmeßgerät zugeführt,
so läßt sich die Schichtdicke äußerst genau über einen großen Meßbereich (z. B. einige Hundert Nanometer bis zu einigen Dezimetern) bestimmen.

Lichtschwache oder Infrarotspektren können durch Einschalten
eines Bildwandlers zwischen der Spektraleinrichtung und der
Fernsehkamera sichtbar gemacht werden.

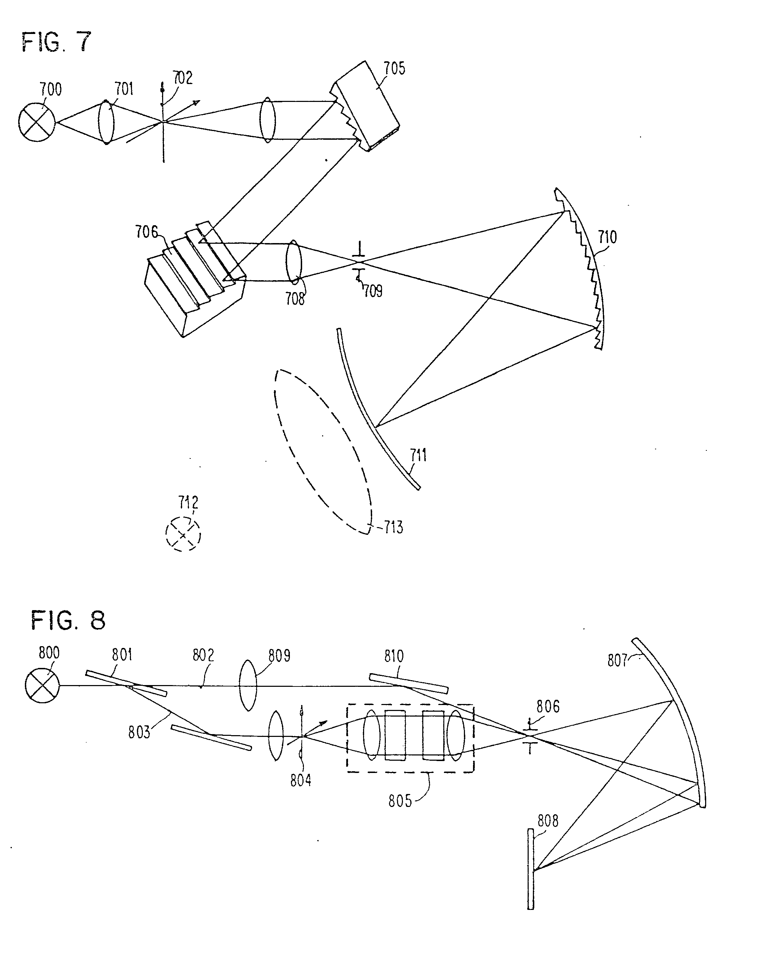

Eine weitere Anwendung der spektralen Codierung betrifft
ein Hochgeschwindigkeits-Bildaufzeichnungsverfahren. Nach
Fig. 7 wird das durch die gekreuzten Gitter 705, 706 spektral codierte Licht des Gegenstandes 702 auf eine Lochblende
709 abgebildet und gelangt von dort auf ein konkav ausgebildetes Gitter 710, das auf einem Schirm 711 ein Spektrum niederer Ordnung erzeugt. Das Gitter 710 spreizt somit das
spektral codierte Licht in eindimensionaler Richtung wieder
auf. Wird in der Ebene 711 ein photoempfindliches Material
angebracht, das sich kontinuierlich bewegt, kann die in
diesem Licht enthaltene Information mit hoher Auflösung
gespeichert werden.

GE 979 028 E

- 16 -

Zur Aufzeichnung zeitlich veränderlicher Vorgänge ist es vorteilhaft, den Film nicht senkrecht zur Aufspaltung zu bewegen, sondern unter einem flachen Winkel, um so ähnlich wie in der Videobandtechnik mit geringerer Filmbreite bei mäßigen Vorschubgeschwindigkeiten auszukommen.

Zur Rekonstruktion dient eine Lichtquelle 712, die das Aufzeichnungsmaterial über eine Linse 713 beleuchtet. In Umkehrung des Lichtwegs bezüglich der Aufzeichnung entsteht dann wieder über die gekreuzten Gitter 706, 705 ein Bild des Objekts 701.

Eine besonders hohe Aufzeichnungsdichte läßt sich erreichen, wenn die Bildaufzeichnung in der Ebene 711 nach dem Prinzip der Volumenholographie erfolgt. In Fig. 8 wird dazu das Licht der Lichtquelle 800 durch einen halbdurchlässigen Spiegel 801 in zwei Teilstrahlen 802 und 803 aufgespalten, von denen der Strahl 803 in der anhand von Fig. 7 beschriebenen Weise durch das Objekt 804 und eine gekreuzte Gitteranordnung 805 (hier mit zwei leicht gegeneinander geneigten Fabry-Perot Interferometern) geschickt wird und über eine Lochblende 806 und ein konkaves Gitter 807 auf das Aufzeichnungsmedium 808 gelangt. Der Teilstrahl 802 stellt ein Referenzbündel dar, das über eine Linse 809 und einen Spiegel 810 auf das konkave Gitter 807 gerichtet wird. Es wird dort in gleicher Weise wie das Signalbündel 803 nach Wellenlängen aufgespalten und an dieselbe Stelle des Aufzeichnungsmediums 808 gerichtet wie der Signalstrahl. Bild- und Referenzstrahl sind also in jedem Punkt der Aufzeichnungsebene kohärent. Mit einer derartigen Anordnung können auch dreidimensionale Bilder volumenholographisch gespeichert werden, die beispielsweise nach einer Anordnung gemäß Fig. 6 erzeugt wurden. Zur Rekonstruktion des Bildes wird der Referenzstrahl oder ein dazu konjugierter Strahl auf das Volumhologramm gerichtet.

0031027

PATENTANSPRÜCHE

1.  Anordnung zur spektralen Zerlegung von Licht,
    dadurch gekennzeichnet,
    daß ein erstes (11, Fig. 2A) und ein zweites (12) Beugungselement (Transmissions- bzw. Reflexionsgitter, bzw.
    Interferometer) optisch hintereinandergeschaltet sind,
    wobei die Beugungsfiguren in zwei zueinander senkrechten Richtungen erzeugt werden,
    daß das erste Beugungselement eine in den Strahlengang
    fallende hohe Beugungsordnung (z.B. N = 100 ... 1000) erzeugt und das zweite Beugungselement eine in den Strahlengang fallende niedere Beugungsordnung (z.B. M = 1 ..
    10).

2.  Anordnung nach Anspruch 1,
    dadurch gekennzeichnet,
    daß vor dem ersten Beugungselement und nach dem zweiten
    Beugungselement abbildende Elemente (z.B. Linsen 10, 13)
    angeordnet sind.

3.  Einrichtung zur optischen Nachrichtenübertragung durch
    Lichtleiterfasern,
    dadurch gekennzeichnet,
    daß im optischen Übertragungsweg vor dem Eintritt (37)
    in die Lichtleiterfaser (38) und nach dem Austritt (37')
    aus der Lichtleiterfaser Anordnungen zur spektralen Zerlegung (300, 300') nach Anspruch 1 oder 2 angeordnet
    sind.

4.  Einrichtung nach Anspruch 3,
    dadurch gekennzeichnet,
    daß die spektrale Zerlegungsanordnung zwischen dem mit
    weißem Licht beleuchteten Objekt (32) und dem Eintritt
    (37) der optischen Lichtleiterfaser bzw. zwischen dem
    Austritt (37') der Lichtleiterfaser und dem Ort der Bildentstehung (39) angeordnet ist.

5. Einrichtung nach Anspruch 3,
   dadurch gekennzeichnet,
   daß die spektrale Zerlegungseinrichtung (300) zwischen
   der weißen Lichtquelle (30) und dem Objekt (32) angeordnet ist,
   und daß das vom Objekt ausgehende spektral zerlegte
   Licht auf den Eintritt (37) der optischen Lichtleiterfaser abgebildet wird.

6. Einrichtung nach einem der Ansprüche 3 bis 5,
   dadurch gekennzeichnet,
   daß zum Übertragen verschiedener Blickwinkel eines
   Gegenstandes (400, Fig. 4) dieser über einen abbildenden Spiegel (402) und einen um zwei Achsen drehbaren
   ersten Schwingspiegel (403) auf die spektrale Zerlegungsanordnung (405) projiziert wird, und daß am Ausgang der Lichtleiterfaser (406) eine weitere identische spektrale Zerlegungsanordnung mit nachgeschaltetem zweiten Schwingspiegel vorgesehen ist, der zur Erzeugung eines räumlichen Bildes mit dem ersten Schwingspiegel synchron betrieben wird.

7. Optischer Frequenzanalysator,
   dadurch gekennzeichnet,
   daß das zu untersuchende Licht (Quelle 600; Fig. 6)
   über eine spektrale Zerlegungsanordnung (604, 605) nach
   Anspruch 1 oder 2 auf eine nach dem Rasterprinzip abgetastete photoempfindliche Fläche (606) abgebildet
   wird.

8. Optischer Frequenzanalysator nach Anspruch 7,
   dadurch gekennzeichnet,
   daß die Ablenkung des Rasterstrahls für die photoempfindliche Fläche proportional zur Wellenzahl erfolgt.

GE 979 028E

9. Einrichtung zur schnellen Speicherung optischer Bilder zwei- oder dreidimensionaler Objekte,
dadurch gekennzeichnet,
daß das Objekt (702; Fig. 7) mit weißem Licht (Quelle 700) beleuchtet wird,
daß das vom Objekt ausgehende Licht eine spektrale Zerlegungsanordnung nach Anspruch 1 oder 2 durchläuft und von einem nachgeschalteten Gitter (710) linear gespreizt wird, um auf einer sich kontinuierlich bewegenden photoempfindlichen Schicht (711) registriert zu werden.

10. Einrichtung nach Anspruch 9,
dadurch gekennzeichnet,
daß auf der photoempfindlichen Schicht (808; Fig. 8) mit Hilfe eines Referenzstrahls, der am zur Aufspreizung verwendeten Gitter (807) spektral zerlegt wird, ein Volumenhologramm erzeugt wird.

GE 979 028E

FIG. 1

FIG.2A

FIG.2B

$\Delta h$

FIG.2C

0031027

FIG. 3

FIG. 4

**FIG.5**

**FIG. 6A**

| λ ( ): 650 —— 640 | PURPUR |
| 640 —— 630 | ROT |
| 630 —— 620 | |
| ⋮ | |
| 470 —— 460 | VIOLETT |
| 460 —— 450 | |

FREQUENZ-ZÄHLER

RECHNER

ABLENK-STEUERG.

**FIG. 6 B**

FIG. 7

FIG. 8